# EUROPÄISCHE PATENTSCHRIFT

(11) **EP 0 887 353 B1**
(45) Veröffentlichungstag und Bekanntmachung des Hinweises auf die Patenterteilung: **20.08.2003**
(21) Anmeldenummer: 98890162.5
(22) Anmeldetag: 28.05.1998
(51) Int. Cl.: C07F 5/02

(54) **Lumineszenzindikator**
Luminescence indicator
Indicateur de luminescence

(30) Priorität: 30.05.1997 AT 92997
(43) Veröffentlichungstag der Anmeldung: 30.12.1998
(73) Patentinhaber: F. HOFFMANN-LA ROCHE AG, 4070 Basel (CH)
(72) Erfinder: Wolfbeis, Otto S., 93051 Regensburg (DE); Daub, Jörg, 93057 Regensburg (DE); Gareis, Thomas, 93049 Regensburg (DE); Kollmannsberger, Matthias, 93047 Regensburg (DE); Heinl, Stefan, 93073 Neutraubling (DE); Werner, Tobias, 93051 Regensburg (DE); Huber, Christian, 93326 Abensberg (DE); Boila-Göckel, Andrei, 8010 Graz (AT); Leiner, Marco Jean Pierre, 8045 Graz (AT)
(74) Vertreter: Schwarz, Albin, Dr.

(56) Entgegenhaltungen:
- US-A- 5 439 828
- FALK, HEINZ ET AL: "The chemistry of bile pigments. LXXXIV. Preparation and luminescence of bichromophoric 5-aryldipyrrin derivatives" MONATSH. CHEM. ( 1990 ), 121(1), 67-76 , Bd. 121, Nr. 1, 1990, Seiten 67-76, XP000892157
- M. P. DEBRECZENY ET AL.: "Optical control of photogenerated ion pair lifetimes: An approach to a molecular switch" SCIENCE, Bd. 274, 25. Oktober 1996 (1996-10-25), Seiten 584-587, XP000892161

## Beschreibung

Die vorliegende Erfindung betrifft Lumineszenzindikatoren zur Bestimmung von Kationen, insbesondere Alkaliionen, flüssiger, insbesondere wässeriger Medien. Bei dieser Bestimmung wird die zu bestimmende Substanz (=Analyt) mit einem Lumineszenzindikator (=Luminophor-Ionophor), der einen luminophoren Rest und einen ionophoren Rest aufweist, in Kontakt gebracht wird, welcher ionophore Rest mit dem in der Probe enthaltenen Analyt reagiert, wobei der luminophore Rest seine Lumineszenzeigenschaften ändert, wonach die Lumineszenz gemessen und mit dem Meßergebnis auf die Konzentration oder die Aktivität des Analyten geschlossen wird, d.h. das Kation bestimmt wird.

Ein derartiges Bestimmungsverfahren beruht auf dem sogenannten "PET-Effekt". Darunter wird ein mittels Photonen induzierter Elektronen-Transfer (photoinduced electron transfer = PET) vom ionophoren Rest bzw. Ionophor auf den luminophoren Rest bzw. Luminophor verstanden, der zu einer Verringerung der (relativen) Lumineszenzintensität und der Lumineszenzabklingzeit des Luminophors führt. Die Absorptions- und die Emissionswellenlängen werden jedoch dabei im wesentlichen nicht beeinflußt (J.R. Lakowicz in "Topics in Fluorescence Spectroscopy", Band 4: Probe Design and Chemical Sensing; Plenum Press, New York & London (1994)).

Durch die Bindung von Ionen an den Ionophor wird der PET-Effekt teilweise oder vollständig blockiert, sodaß es zu einem Anstieg der Lumineszenz des luminophoren Restes kommt. Somit kann durch Messung der Änderung der Lumineszenzeigenschaften, d.h. der Lumineszenzintensität und/oder der Lumineszenzabklingzeit, auf die Konzentration oder die Aktivität des zu bestimmenden Ions geschlossen werden.

Aus der US-A - 5,516,911 sind Fluoreszenzindikatoren für die intrazelluläre Kalziumbestimmung bekannt, welche fluoreszierende Substituenten tragen, die als optische Indikatoren wirken können.

Auch aus der US-A - 5,439,828 ist ein Bestimmungsverfahren bekannt, wobei als Luminophor-Ionophor Diaza-Kryptanden verwendet werden, die mit fluoreszierenden Cumarinen als Fluorophor funktionalisiert sind und je nach Struktur für Lithium-, Natrium- oder Kaliumionen spezifisch sind. Es wird angegeben, daß diese Luminophor-Ionophore in pH-neutralen Probemedien verwendet werden können und in solchen Systemen auch bevorzugt eingesetzt werden.

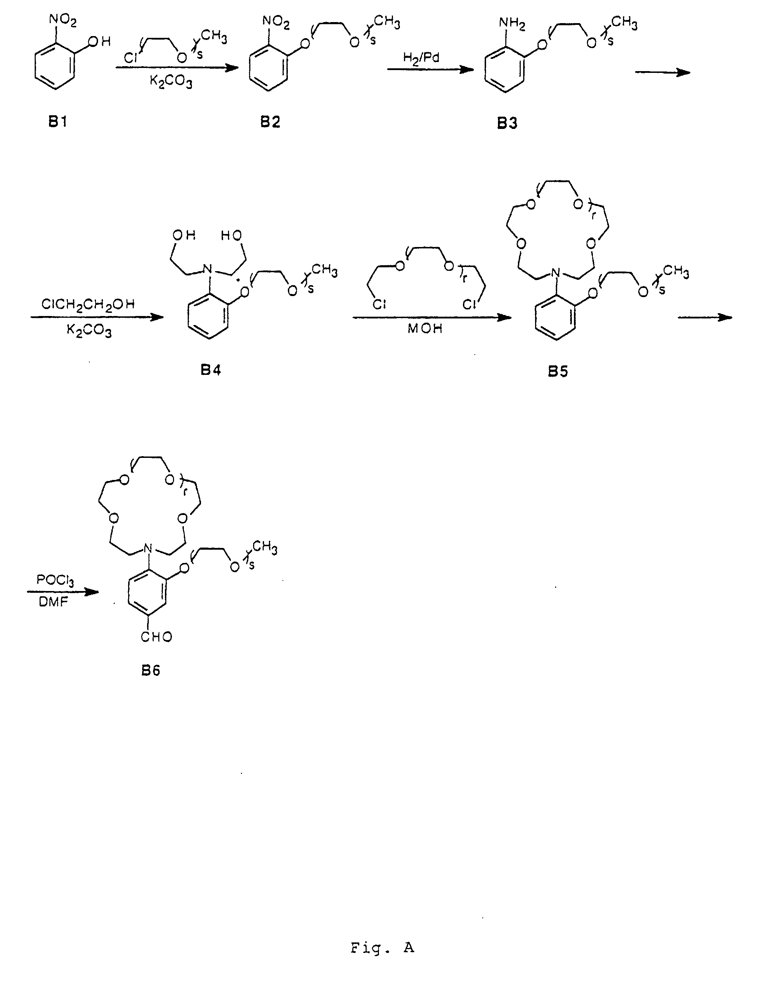

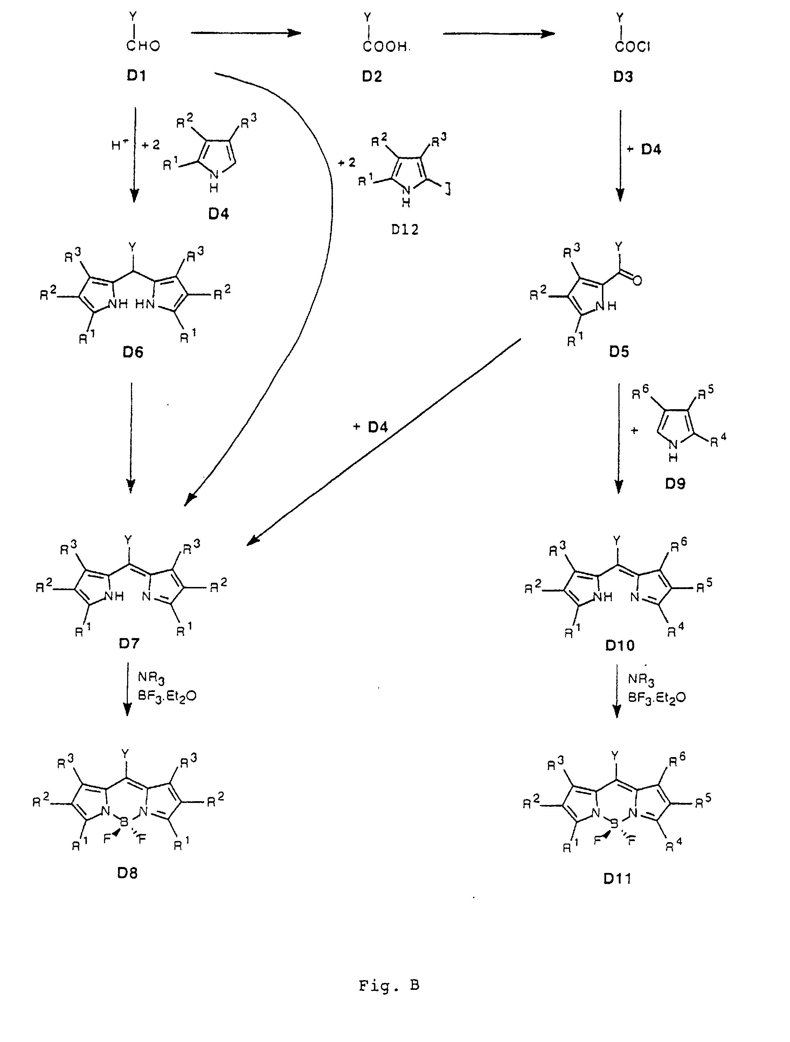

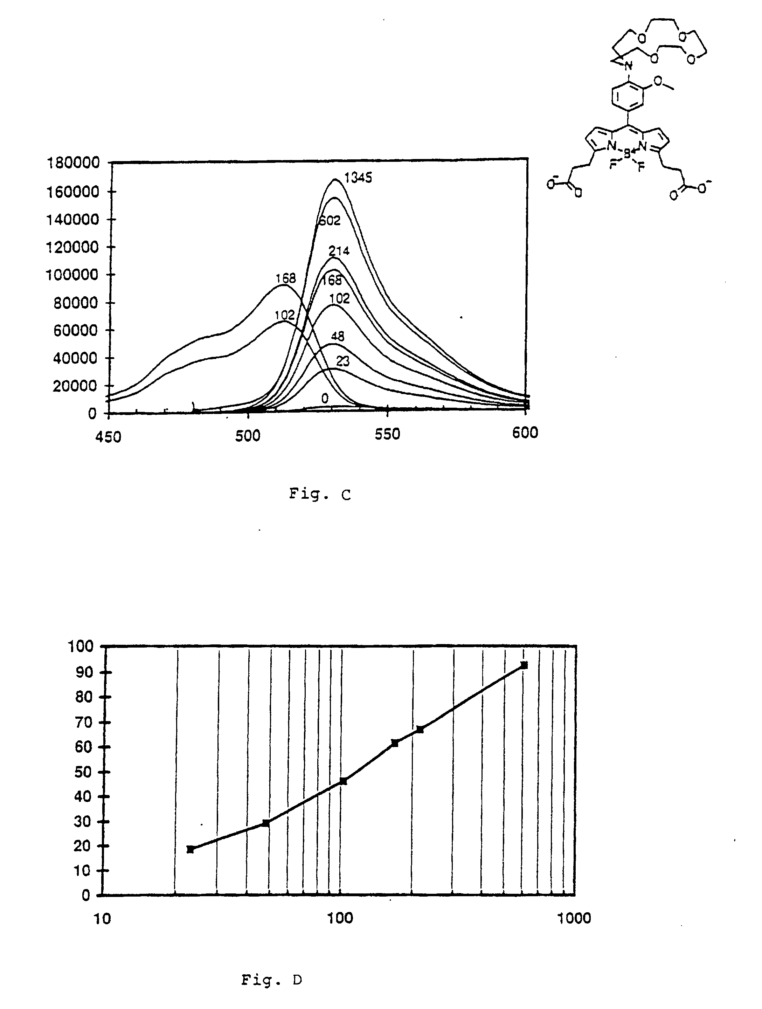

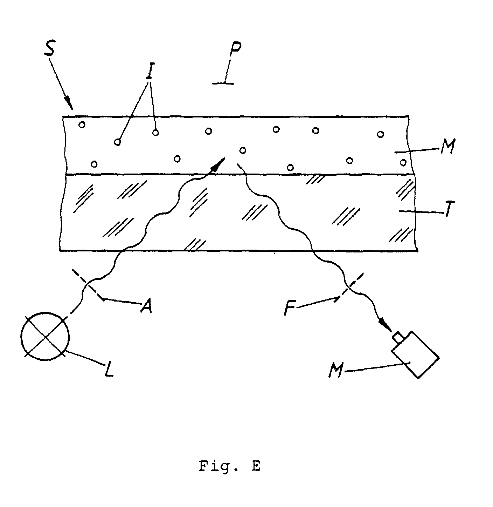

Untersuchungen (Frank Kastenholz, Inaugural-Dissertation, Universität zu Köln, 1993, Abb. 32, Seite 54) haben jedoch gezeigt, daß das Fluoreszenzsignal im physiologischen pH-Bereich signifikant vom pH-Wert der Probe abhängt und mit fallendem pH-Wert bereits ab einem pH von 7,4 stark ansteigt. Dies beeinträchtigt die Genauigkeit einer Bestimmung, die in biologischen Proben durchgeführt wird. Ferner haben die verwendeten Verbindungen den Nachteil, daß die verwendeten Cumarine Absorptionswellenlängen von etwa 336 nm aufweisen und daher nicht von kommerziellen LEDs angeregt werden können.

Diese Nachteile gelten auch für die in der US-A - 5,162,525 genannten Luminophor-Ionophore.

Aus Tetrahedron Letters, Band 31, Nr. 36, Seiten 5193-5196 (1990) sind Diaza-Kryptanden bekannt, bei denen beide Stickstoffatome an jeweils einen aromatischen Ring gebunden sind, d.h. Aryl-Stickstoffe bzw. Stickstoffe vom Anilintypus sind. Untersuchungen der Anmelderin haben gezeigt, daß sich diese Diaza-Kryptanden nicht zur Bestimmung von Kaliumionen eignen, wenn sie im physiologischen Konzentrationsbereich und physiologischen pH-Werten des Blutes (7,0-7,6) vorliegen.

Die US-A - 4,774,339, US-A - 5,187,288, US-A - 5,274,113 und die US-A - 5,248,782 beschreiben fluoreszierende Farbstoffe mit Dipyrromethenbordifluorid als Grundkörper und seine Derivate mit reaktiven Substituenten zwecks kovalenter Anbindung an Biomoleküle.

Aus der US-A - 5,433,896 sind fluoreszierende Farbstoffe bekannt, die als Grundkörper 1-[Isoindolyl]methylen-isoindiol aufweisen.

Farbstoffkonjugate des Dipyrromethenbordifluorids, wobei zumindest einer der reaktiven Substituenten ein Farbstoffmolekül kovalent an einen spezifischen Bindungspartner, z.B. ein Nukleotid oder ein Protein, bindet, sind aus der US-A - 5,451,663 beschrieben.

Die vorliegende Erfindung stellt sich die Aufgabe, Luminophor-Ionophore zur Verfügung zu stellen, die bei physiologischen pH-Werten keine signifikante Abhängigkeit der Lumineszenzeigenschaften vom pH-Wert der Probe zeigen und daher zur Bestimmung bei biologischen Proben geeignet sind.

Das erfindungsgemäße Verfahren soll ferner insbesondere bei Vorliegen physiologischer Alkaliionenkonzentrationen gut durchführbar sein, d.h. eine große Abhängigkeit des Lumineszenzsignals von der Konzentration des zu bestimmenden Alkaliions aufweisen.

Diese Aufgabe wird dadurch gelöst, daß als Indikator eine Verbindung der allgemeinen Formel I 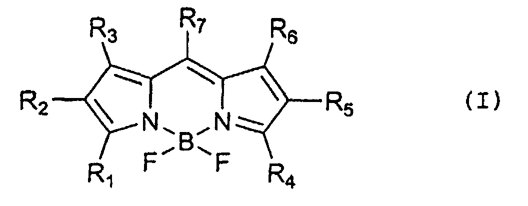 eingesetzt wird, in welcher eine der Gruppen R₁, R₂, R₃, R₄, R₅, R₆ und R₇ für einen ionophoren Rest steht, der mit einem in einer Probe enthaltenen Analyt reagiert, wobei der Grundkörper der allgemeinen Formel I (= luminophorer Rest) seine Lumineszenzeigenschaften ändert, und die übrigen.

Gruppen jeweils voneinander unabhängig Wasserstoff, eine lipophile oder hydrophile Gruppe oder eine reaktive Gruppe zur Kopplung an ein Polymer oder ein Biomolekül sind, oder R₂ zusammen mit R₃ ein aromatisches Ringsystem bildet und R₅ zusammen mit R₆ ein aromatisches Ringsystem bildet.

Als lipophile Gruppen eignen sich z.B. substituierte und unsubstituierte Alkylgruppen und Alkoxygruppen mit bis zu 20 C-Atomen.

Als hydrophile Gruppe eignen sich Alkylgruppen mit 1-17 C-Atomen und mindestens einer Hydroxylgruppe und/oder funktionelle Gruppen, die beim pH der Meßlösung in dissoziiertem Zustand vorliegen, wie z.B. Carbonsäuren, Sulfonsäuren und Phosphorsäuren.

Reaktive Gruppen z.B. zur Kopplung an aminofunktionalisierte Polymere, z.B. Aminocellulose und aminofunktionelle Polyacrylamide, sind z.B. aus der US-A - 4,774,339, Tabelle 4, bekannt.

R₇ steht bevorzugt für den ionophoren Rest, und R₃ und R₆ stehen bevorzugt voneinander unabhängig für Wasserstoff oder Methyl.

Die Reste R₁ und R₄ stehen vorzugsweise für eine lipophile Gruppe, insbesondere jeweils für tert. Butyl.

Für die erfindungsgemäße Verbindung der allgemeinen Formel I sind folgende Substitutionsmuster besonders bevorzugt:
Muster 1:
   - R₇:: ionophorer Rest;
   - R₁, R₄:: lipophile Gruppe, vorzugsweise t-Butyl;
   - R₃, R₆:: voneinander unabhängig -CH₃ oder H;
   - R₂ oder R₅:: Säurerest, vorzugsweise Propionsäurerest zwecks Immobilisierung;
Muster 2:
   - R₇:: ionophorer Rest;
   - R₁, R₄:: lipophile Gruppe, vorzugsweise t-Butyl;
   - R₃:: voneinander unabhängig -CH₃ oder H;
   - R₆: Säurerest, vorzugsweise Propionsäurerest zwecks Immobilisierung;
Muster 3:
   - R₇:: ionophorer Rest;
   - R₁:: lipophile Gruppe, vorzugsweise t-Butyl;
   - R₃, R₄, R₆:: voneinander unabhängig -CH₃ oder H;
   - R₅:: Säurerest, vorzugsweise Propionsäurerest zwecks Immobilisierung.

Bei der erfindungsgemäßen Verbindung der allgemeinen Formel I ist der ionophore Rest bevorzugt ein Monoaza-Kronenether der allgemeinen Formel II 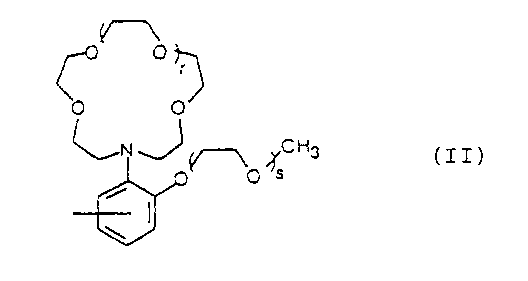 worin r und s unabhängig voneinander die ganze Zahl 0, 1 oder 2 bedeuten.

Der waagrechte Strich, der in der allgemeinen Formel II am Benzolring angebracht ist, soll die kovalente chemische Bindung symbolisieren, über welche der ionophore Rest direkt an die Verbindung der allgemeinen Formel I gebunden ist. Diese Bindung kann in ortho-, in den beiden meta- oder in para-Position zum Stickstoff vorhanden sein.

Es hat sich gezeigt, daß sich diese neuen Luminophor-Ionophore sehr gut zur Bestimmung von Kationen, insbesondere Alkaliionen, bei physiologischen pH-Werten und bei physiologischen Konzentrationen eignen.

Es hat sich des weiteren gezeigt, daß sich die erfindungsgemäßen Monoaza-Kronenether insbesondere gut zur Bestimmung von Natriumionen im Konzentrationsbereich zwischen 110 und 180 mmol/l eignen.

Als ionophorer Rest eignen sich alle Reste, mit welchen sich in Kombination mit dem Grundgerüst der allgemeinen Formel I ein PET-Effekt erzielen läßt. Aus der Literatur ist eine Vielzahl ionophorer Reste bekannt, die in Kombination mit dem Ionophor den PET-Effekt ergeben oder sich prinzipiell eignen. Durch Ankoppelung dieser ionophoren Reste an das obige Grundgerüst der allgemeinen Formel I werden neue Verbindungen erhalten, an denen der Fachmann prüfen kann, ob sich ein PET-Effekt erzielen läßt.

Wie dem Fachmann bekannt ist, ist für das Zustandekommen eines PET-Effektes insbesondere eine elektronische Entkoppelung des Elektronendonors des ionophoren Restes vom elektronischen System des luminophoren Restes (Grundkörper der allgemeinen Formel I) wesentlich.

Die elektronische Entkoppelung ist z.B. daran erkenntlich, daß sich die Absorptions- und Emissionsspektren des luminophoren Restes hinsichtlich ihrer Wellenlänge nicht wesentlich ändern.

Zur Bestimmung von Natriumionen wird bevorzugt ein Monoaza-Kronenether der allgemeinen Formel II eingesetzt, in welcher r und s die Zahlen 1 bzw. 0 bedeuten.

Zur Bestimmung von Kaliumionen wird ferner bevorzugt ein Monoaza-Kronenether der allgemeinen Formel II eingesetzt, in welcher r und s die Zahlen 2 bzw. 1 bedeuten.

Nachfolgend wird die Erfindung beispielhaft noch näher beschrieben, wobei Synthese und Eigenschaften einiger bevorzugt verwendeter Indikatoren erläutert werden. Andere erfindungsgemäße Indikatoren können vom Fachmann auf analoge Weise hergestellt werden.

### 1. Synthese von Vorstufen für die erfindungsgemäßen Verbindungen

### 1.1. Synthese des ionophoren Restes für die erfindungsgemäßen Monoaza-Kronenether (Figur A)

Der Syntheseweg für den ionophoren Teil der erfindungsgemäßen Monoaza-Kronenether ist in der Figur A allgemein dargestellt.

### Allgemeines Verfahren (Figur A)

Die Synthese von Monoaza-kronen-(Lariat)-ethern mit Seitenarmen wurde über zwei Hauptschritte vorgenommen: einer Alkylierung und einer Cyclisierung. 2-Nitrophenol B1 konnte in Dimethylformamid in Gegenwart von K₂CO₃ mit Chlorethyl-alkoxyethern mit verschiedener Kettenlänge (s=0, 1, 2) alkyliert werden. Die erhaltenen Nitroverbindungen B2 wurden zu Aminen B3 hydriert, gefolgt von einer Alkylierung der Aminogruppe in Chlorethanol mit K₂CO₃ als Base zu den 2-[N,N-Bis(2-hydroxyethylaminophenylalkoxyethyl-ethern B4 (s=0, 1, 2). Diese Bis-Hydroxy-Verbindungen B4 wurden mit Ethylglycol-dichlorethyl-ethern (r=0,1,2) in Dioxan mit Alkalihydroxid zu den Lariat-ethern B5 (r=0, 1, 2; s=0, 1, 2) cyclisiert. Diese Ether B5 (Phenylaza-kronenether) wurden formyliert, um die Zwischenprodukte B6 (r=0, 1, 2; s=0, 1, 2) zu erhalten.

### Beschreibung einzelner Reaktionschritte der Figur A

### N,N-Bis(2-hydroxyethyl)-2-methoxyanilin B4 (s=0) :

452 g (4 mol) o-Anisidin wurden in 1932 g (24 mol) 2-Chlorethanol gelöst und 15 min auf 80°C erhitze. Dann wurden 608 g (4,4 mol) K₂CO₃ langsam zugegeben, um die Temperatur unter 110°C zu halten (exotherme Reaktion). Das Gemisch wurde 22 Stunden auf 95°C erhitzt und abgekühlt. Etwa 800 ml nicht umgesetztes Chlorethanol wurden abgedampft, und der Rückstand wurde mit 1 l Wasser verdünnt und 2 mal mit 1 1 Chloroform extrahiert. Der Extrakt wurde 5 mal mit 1,5 1 Wasser gewaschen und über K₂CO₃ getrocknet. Das Lösungsmittel wurde abgedampft, wobei 404 g (Ausbeute: 48%) hellbraunes Öl erhalten wurden. Das Dünnschichtchromatogramm zeigte eine Reinheit von etwa 95%.
¹H-NMR (CDCl₃), δ (ppm): 3,18 (t, 4H), 3,50 (t, 4H), 3,60 (m, 2H), 3,82 (s, 3H), 6,90 (m, 2H), 7,10 (m, 1H), 7,19 (m, 1H).

### 2-Methoxyphenylaza-15-krone-5 B5 (s=0, r=1) :

Dieser Schritt wurde in Anlehnung an J.P.Dix und F. Vögtle, Chem. Ber. 113, 457-470 (1980) vorgenommen.

403 g (1,91 mol) B4 (s=0) wurden in 2210 ml Dioxan gelöst und 20 min auf 80°C erhitzt. Dann wurden 168 g (4,20 mol) gemahlenes NaOH langsam innerhalb von 3 Stunden zugegeben. Die Temperatur wurde auf 95°C angehoben, als 300 ml (1,93 mol) Bis(2-chlorethoxyethan) in einer Portion zugegeben wurden, dann wurde das Reaktionsgemisch 30 Stunden auf 95°C erhitzt. Nach Filtration des heißen Gemisches wurde das Lösungsmittel abgedampft. Der Rückstand wurde mit einer Lösung von 234 g (1,91 mol) NaClO₄ in 640 ml Methanol behandelt. Das Gemisch wurde 30 min bei 60°C gerührt und auf etwa 300 ml konzentriert. 860 ml Ethylacetat wurden zugegeben, und es wurde anschließend 20 min bei Raumtemperatur gerührt. Dann wurde das Gemisch 2 Stunden bei Raumtemperatur stehengelassen.

Das erhaltene Präzipitat wurde filtriert, 2 mal mit 200 ml Ethylacetat gewaschen und 30 min bei Raumtemperatur getrocknet, wobei 199 gAzakrone-Natriumperchlorat-Komplex als weißes, weiches Pulver erhalten wurden. Dieses Pulver wurde in einem Gemisch aus 600 ml Dichlormethan und 600 ml Wasser gelöst, und die wässerige Phase wurde neuerlich mit 400 ml Dichlormethan extrahiert. Die organischen Schichten wurden vereinigt, 8 mal mit 600 ml entionisiertem Wasser gewaschen und über Na₂SO₄ getrocknet. Das Dichlormethan wurde abgedampft, wobei 100,4 g hellgelbes Öl (Ausbeute: 16%) erhalten wurden.
¹H-NMR (CDCl₃), δ (ppm): 3,49 (t, 4H), 3,68 (t, 16H), 3,82 (s, 3H), 6,88 (m, 3H), 7,12 (m, 1H).

### 4-Formyl-2-methoxyphenylaza-15-krone-5 B6 (s=0, r=1):

100 g (308 mml) B5 (s=0, r=1) wurden in 145 ml (1850 mmol) Dimethylformamid in einem 500 ml Dreihalskolben gelöst und auf -5°C abgekühlt. 57,4 ml (616 mmol) POCl₃ wurden in einem Zugabetrichter tropfenweise zugegeben. Die Innentemperatur des Kolbens wurde 5°C nicht überschreiten gelassen. Dann wurde 16 Stunden bei Raumtemperatur gerührt, auf 500 g Eis gegossen und mit gesättigter wässeriger K₂CO₃-Lösung auf pH 7 gebracht. Die Lösung wurde 2 mal mit 500 ml Chloroform extrahiert. Die Chloroform-Phase wurde 2 mal mit 500 ml Wasser gewaschen, über 100 g MgSO₄ 1 Stunde getrocknet. Das Lösungsmittel wurde abgedampft, wobei 85 g hellgelbes Öl erhalten wurden, welches beim Stehenlassen über Nacht bei Raumtemperatur kristallisierte. Umkristallisation aus Ethylacetat/Hexan (1:4) ergab 56 g hellorange Kristalle (Ausbeute: 51%).
¹H-NMR (CDCl₃), δ (ppm): 3,68 (t, 16H), 3,78 (t, 4H), 3,82 (s, 3H), 7,05 (m, 1H), 7,28 (m, 2H), 9,78 (s, 1H).

### 2. Synthese von erfindungsgemäßen Verbindungen

### 2.1. Allgemeine Synthese (Figur B)

### 2.1.1. Syntheseweg 1 (symmetrisch substituierte Derivate D8)

Ein Aldehyd D1, in welchem Y für den ionophoren Rest der allgemeinen Formel (II) steht, d.h. die Verbindung B6, und das Pyrrolderivat D4 wurden in einem organischen Lösungsmittel gelöst und mit einer Säure versetzt, wobei die Verbindung D6 als Zwischenprodukt entstand. Durch Zugabe von p-Chloranil in einem geeigneten Lösungsmittel wurde durch Oxidation von D6 die Verbindung D7 erhalten. Im Falle der p-Hydroxybenzaldehydderivate kann direkt aus der Reaktionslösung das Dipyrromethen D7 erhalten und auch isoliert werden.

Alternativ kann das Dipyrromethen D7 auch durch Umsetzung von D1 mit der Jod-Verbindung D12 hergestellt werden.

Die Umsetzung von D7 zum symmetrisch substituierten 4,4-Difluor-4-bora-3a,4a-diaza-s-indazenderivat D8 erfolgte durch abwechselnde Zugabe von Ethyldiisopropylamin und BF₃.Et₂O zu der Reaktionslösung.

Die Reaktionslösung von D8 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D8 erhalten, welche aus einem geeigneten Lösungsmittel (z.B. Chloroform/Hexan) umkristallisiert werden konnte.

### 2.1.2. Syntheseweg 2 (symmetrisch substituierte Derivate D8)

Der obige Aldehyd D1, in welchem Y für den ionophoren Rest der allgemeinen Formel (II) steht, wurde zur Carbonsäure D2 oxidiert und anschließend in das entsprechende Säurechlorid D3 umgewandelt.

Das oben erhaltene Säurechlorid D3 wurde dann mit dem Pyrrolderivat D4 zum Keton D5 umgesetzt, und durch weitere Reaktion mit D4 wurde D7 erhalten. Die Umwandlung von D7 in D8 erfolgte wie bereits beschrieben.

Die Reaktionslösung von D8 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D8 erhalten, welche aus einem geeigneten Lösungsmittel (z.B. Chloroform/Hexan) umkristallisiert werden konnte.

### 2.1.3. Syntheseweg 3 (unsymmetrisch substituierte Derivate D11)

Das Keton D5, das wie oben beschrieben erhalten wurde, konnte mit einem von D4 verschiedenen Pyrrolderivat D9 zu D10 umgesetzt werden. Durch Zugabe von Ethyldiisopropylamin und BF₃.Et₂O zu der Reaktionslösung wurde aus D10 das unsymmetrisch substituierte 4,4-Difluor-4-bora-3a,4a-diaza-s-indazenderivat D11 erhalten.

Die Reaktionslösung von D11 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D11 erhalten, welche aus einem geeigneten Lösungsmittel (z.B. Chloroform/Hexan) umkristallisiert werden konnte.

### 2.1.4. Synthese spezifischer Verbindungen

### 8-[4'-C-(Aza-15-krone-5)-3'-methoxyphenyl]-3,5-methoxycarbonylethyl-4-difluorbor-3a,5a-s-indazen:

0,32 g (2 mmol) 2-Pyrrol-methylpropionat und 0,35 g (1 mmol) 4-Formyl-2-methoxyphenylaza-15-krone-5 (B6, s=0, r=0) wurden in 100 ml wasserfreiem CH₂Cl₂ gelöst und 5 min unter Stickstoff gerührt. 40 µl Trifluoressigsäure wurden zugegeben und die Lösung wurde noch 1,5 Stunden weitergerührt. Dann wurden 0,94 g (2 mmol) Tetrachlorbenzoquinon in 20 ml wasserfreiem Tetrahydrofuran in einer Portion zugegeben. Die erhaltene dunkelrote Lösung wurde 15 min gerührt. 5 mal 1 ml Diisopropylethylamin und 5 mal 1 ml Bortrifluoriddiethyletherat wurden abwechselnd zugegeben. Das Gemisch wurde 30 min gerührt und 2 mal mit 100 ml 2 N HCl gewaschen, über K₂SO₄ getrocknet, und mittels Silikagel 100 mit 9:1 CHCl₃/Ethylacetat gereinigt, wobei 0,21 g oranges Pulver erhalten wurden.

### Allgemeine Beschreibung der Hydrolyse des Diesters D8 zu Dicarbonsäuren:

Der Diester D8 (Y= Aza-Krone B5 mit s=0 und r=1 wurde in Tetrahydrofuran gelöst und auf das doppelte Volumen mit Wasser verdünnt. Das Gemisch wurde mit konzentrierter H₃PO₄ sauer gestellt und 4 Tage bei 70°C gerührt. Dies Lösung wurde im Vakuum konzentriert, der Rückstand in Chloroform aufgenommen, über Natriumsulfat getrocknet und das Lösungsmittel entfernt. Der Rückstand wurde anschließend mittels Säulenchromatographie auf Kieselgel und Chloroform/Methanol als Laufmittel gereinigt. Als Nebenprodukt wurde auch die Monocarbonsäure erhalten.

Dieser Lumineszenzindikator eignet sich zur Bestimmung physiologischer Natriumionen-Konzentrationen.

Herstellung der Mono-Ester: R₁= -CH₂-CH₂-COO-CH₃, R₄= -CH₂-CH₂-COOH, und der Di-Säuren: R₁ = R₄ = -CH₂-CH₂-COOH:

Das orange Pulver aus den beiden vorangegangenen Synthese-Beispielen wurde in 4 ml Tetrahydrofuran gelöst, und es wurde mit 6 ml Wasser verdünnt. Dann wurden 0,3 ml 85% H₃PO₄ zugegeben und 4 Tage auf 70°C erhitzt. Das Tetrahydrofuran wurde abgedampft und der Rückstand wurde 2 mal mit 50 ml Chloroform extrahiert und über K₂SO₄ getrocknet. Das Lösungsmittel wurde abgedampft, wobei 0,17 g Öl erhalten wurden. Dieses Öl wurde mittels einer Säule gereinigt, die mit Silikagel 100 gepackt war (Eluierungsmittel: Chloroform/Methanol; 3:1), wobei 0,04 g Mono-Ester und 0,02 g Di-Säure erhalten wurden.

Der Monoester wurde verwendet, um die Eigenschaften in Lösung zu messen, während die Di-Säure gemäß nachstehendem Verfahren auf Aminocellulose immobilisiert und in einem Sensor vermessen wurde, wie unten beschrieben wird.

### Herstellung einer Na⁺, K⁺-sensitiven Schicht zur Verwendung in einem Sensor:

0,03 mequ. des Di-Säure-Indikators, 0,06 g (0,3 mmol) N,N-Dicyclohexyl-1,3-carbodiimid, 0,04 g (0,3 mmol) N-Hydroxysuccinimid und 0,5 g aktivierte Cellulose (hergestellt gemäß SU-A - 1,028,677, CA 99:177723h) wurden in 2 ml Dimethylformamid 20 Stunden suspendiert. Anschließend wurde die Cellulose abfiltriert, 5 mal mit 5 ml Dimethylformamid, 5 ml Wasser, 2 mal mit 5 ml 0,2 n HCl, 5 ml Wasser, 2 mal mit 5 ml 0,2 n NaOH, 10 mal mit 5 ml Wasser, 2 mal mit 5 ml Aceton und 2 mal mit 5 ml Ether gewaschen, und 16 Stunden bei Raumtemperatur getrocknet. Anschließend wurde die Cellulose gesiebt (25 µm).

### Sensorscheiben wurden wie folgt hergestellt:

0,25 g gesiebte (25 µm) Aminocellulosefasern mit immobilisiertem Indikator wurden in 4,75 g 10% Hydrogel D4 (Tyndale Plains-Hunter LTD. Ringoes, NJ 08551) in 90% Ethanol-Wasser 16 Stunden suspendiert. Die erhaltene homogene Dispersion wurde auf eine Polyesterfolie ((Goodfellow; Cambridge; Prod. Nr. LS 146585) bis zu einer Trockendichte von 10 µm aufgetragen. Diese Folie wurde mit 3% Aktivkohle in 10% D4-Hydrogel bis zu einer Trockendichte von 5 µm überschichtet, worauf eine kleine Scheibe mit einem Durchmesser von 2,5 cm herausgeschnitten wurde. Diese Scheibe wurde zur Aktivierung mindestens 16 Stunden im Puffer gelassen.

Eine Methode zum Schneiden und Messen von Sensorscheiben wurde von M.J.P. Leiner und P. Hartmann in Sensors and Actuators B, 11 (1993), 281-289 ("Theory and practice in optical pH sensing") beschrieben.

### 3. Lumineszenzeigenschaften einiger erfindungsgemäßer Verbindungen

Die Figuren C und D zeigen die Lumineszenzeigenschaften von zwei erfindungsgemäßen Indikatoren in Abhängigkeit von der jeweiligen Konzentration an Alkaliionen. Die Ordinaten der dargestellten Diagramme geben jeweils die relativen Lumineszenzintensitäten an.

### 3.1. Figur C: 4,4-Difluor-4-bora-3a,4a-diaza-s-indazen-Derivat (allgemeine Formel I, mit R₇ = Aza-Krone als Na⁺-sensitiver, ionophorer Rest; R₂, R₃, R₅ und R₆ = H; R₁ und R₄ = -CH₂-CH₂-COO-)

Mit dem obigen Derivat wurde eine Sensorscheibe hergestellt, und in einer von M.J.P. Leiner und P. Hartmann in Sensors and Actuators B 11, 281-289, 1993 beschriebenen Anordnung wurde die Alkaliionen-abhängige Lumineszenzintensität gemessen.

Die Meßanordnung ist in der Figur E schematisch dargestellt, wobei ein Abschnitt der Sensorscheibe mit S bezeichnet ist. Die im hydrophilen ionenpermeablen Polymer (Hydrogel) gelöste Verbindung ist mit I bezeichnet. Diese Schicht M wird von einem für die Anregungs- und Meßstrahlung durchlässigen Träger T, der eine transparente Folie ist, getragen.

Die Verbindung I kann erfindungsgemäß auch an die ionenpermeable Matrix direkt kovalent gebunden sein oder in der Matrix physikalisch gelöst vorliegen.

Zur Messung wurde die Sensorscheibe in eine lichtundurchlässige, thermostatisierte Durchflußzelle eingebracht und mit Proben P, die verschiedene Alkaliionen-Konzentrationen aufwiesen, in Kontakt gebracht.

Die optische Meßeinrichtung bestand aus einer blauen LED als Lichtquelle A, einer Photodiode M als Detektor, optischen Filtern A und F zur Auswahl der Wellenlängen, einer faseroptischen Anordnung zur Leitung des Anregungslichtes in die Polymerschicht M und zur Leitung des Emissionslichtes zum Photodetektor M, sowie einer Einrichtung zur elektronischen Signalverarbeitung (nicht dargestellt). Anregungsseitig wurde ein Interferenzfilter (Peak-Transmission bei 480 nm) und emissionsseitig ein 520 nm cut-off Kantenfilter verwendet.

Das oben genannte Derivat wurde als Na⁺-Indikator in einem Puffer (Tris(hydroxymethyl)-aminomethan/HCl; pH:7,4) in einer Konzentration von 2x10 ⁻⁵ mol/l gelöst. Aliquoten dieser Lösung wurden unterschiedliche Mengen an NaCl zugesetzt, um Natriumionen-Konzentrationen von 0, 23, 48, 102, 168, 214 und 1345 mmol/l Na zu erhalten.

Die Anregungs/Emissionsspektren wurden jeweils mittels eines handelsüblichen Spektrofluorometers bestimmt.

### 3.2. Figur D: 4,4-Difluor-4-bora-3a,4a-diaza-s-indazen-Derivat (allgemeine Formel I, mit R₇ = Aza-Krone als Na⁺-sensitiver, ionophorer Rest; R₂, R₃, R₅ und R₆ = H; R₁ und R₄ = -CH₂-CH₂-COO-NH-Polymer)

Mit der oben genannten Verbindung wurde gemäß obigem Verfahren eine Sensorscheibe mit einer Na⁺-sensitiven Schicht hergestellt, wobei der Na⁺-Indikator auf Aminocellulose kovalent immobilisiert wurde.

Die Figur D zeigt die relative Lumineszenzintensität (Ordinate) in Abhängigkeit von der Natriumionenkonzentration (logarithmische Skala).

Das Meßmedium war 30 mmol/l Tris/HCl-Puffer, CO₂-frei; pH: 7,4; 37°C.

## Patentansprüche

1. Verbindung der allgemeinen Formel I 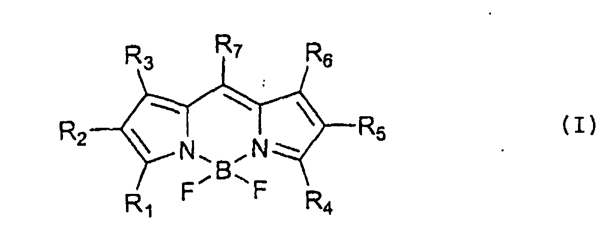 in welcher eine der Gruppen R₁, R₂, R₃, R₄, R₅, R₆ und R₇ für einen ionophoren Rest steht, der mit einem in einer Probe enthaltenen Analyt reagiert, wobei der Grundkörper der allgemeinen Formel I (= luminophorer Rest) seine Lumineszenzeigenschaften ändert, und die übrigen Gruppen jeweils voneinander unabhängig Wasserstoff, eine lipophile oder hydrophile Gruppe oder eine reaktive Gruppe zur Kopplung an ein Polymer oder ein Biomolekül sind, oder R₂ zusammen mit R₃ ein aromatisches Ringsystem bildet und R₅ zusammen mit R₆ ein aromatisches Ringsystem bildet.

2. Verbindung nach Anspruch 1, **dadurch gekennzeichnet, daß** R₇ für den ionophoren Rest steht und R₃ und R₆ voneinander unabhängig für Wasserstoff oder Methyl stehen.

3. Verbindung nach einem der Ansprüche 1 oder 2, **dadurch gekennzeichnet, daß** die Reste R₁ und R₄ für eine lipophile Gruppe, insbesondere jeweils für tert. Butyl, stehen.

4. Verbindung nach einem der Ansprüche 1 bis 3, **dadurch gekennzeichnet, daß** der ionophore Rest ein Monoaza-Kronenether der allgemeinen Formel II 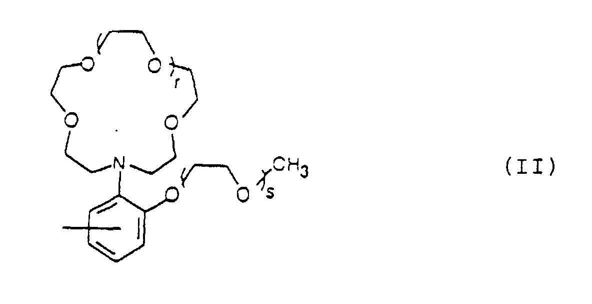 worin r und s unabhängig voneinander die ganze Zahl 0, 1 oder 2 bedeuten, ist.

5. Monoaza-Kronenether nach Anspruch 4 zur Bestimmung von Natriumionen, **dadurch gekennzeichnet, daß** r und s die Zahlen 1 bzw. 0 bedeuten.

6. Monoaza-Kronenether nach Anspruch 4 zur Bestimmung von Kaliumionen, **dadurch gekennzeichnet, daß** r und s die Zahlen 2 bzw. 1 bedeuten.

## Claims

1. A compound having the general Formula I 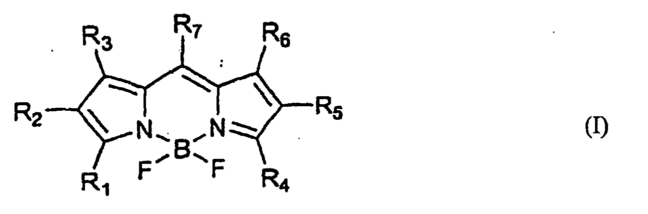 in which one of the groups R₁, R₂, R₃, R₄, R_{5,} R₆ and R₇ represents an ionophoric moiety which reacts with an analyte present in a sample, wherein the mother substance of the general Formula I (=luminophoric moiety) changes its luminescence properties, and the remaining groups each independently are hydrogen, a lipophilic or hydrophilic group or a reactive group for coupling to a polymer or a biomolecule, or R₂ forms an aromatic ring system together with R₃ and R₅ forms an aromatic ring system together with R₆.

2. A compound according to claim 1, **characterized in that** R₇ represents the ionophoric moiety and R₃ and R₆ independently mean hydrogen or methyl.

3. A compound according to any of claims 1 or 2, **characterized in that** the moieties R₁ and R₄ represent a lipophilic group, in particular a tert. butyl each.

4. A compound according to any of claims 1 to 3, **characterized in that** the ionophoric moiety is a monoaza-crown ether having the general Formula II 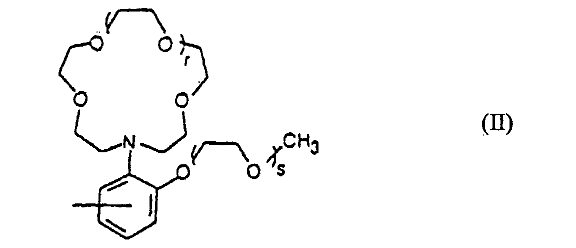 in which r and s independently mean the integer 0, 1 or 2.

5. A monoaza-crown ether according to claim 4 for determining sodium ions, **characterized in that** r and s mean the numbers 1 and 0, respectively.

6. A monoaza-crown ether according to claim 4 for determining potassium ions, **characterized in that** r and s mean the numbers 2 and 1, respectively.

## Revendications

1. Composé de formule générale I, 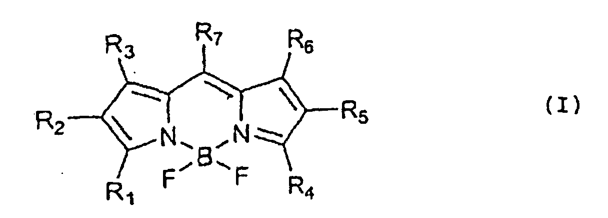 dans laquelle l'un des groupes R₁, R₂, R₃, R₄, R₅, R₆ et R₇ sont un résidu ionophore réagissant avec un analyte contenu dans un échantillon, le corps de base de formule générale I (= résidu luminophore) modifiant ses propriétés de luminescence, et les autres groupes sont chacun, indépendamment l'un de l'autre l'hydrogène, un groupe lipophile ou hydrophile ou un groupe réactif, pour couplage à un polymère ou à une biomolécule, ou R₂ conjointement avec R₃ forme un système en anneau aromatique et R₅ conjointement avec R₆ forme un système en anneau aromatique.

2. Composé selon la revendication 1, **caractérisé en ce que** R₇ est le résidu ionophore et R₃ et R₆ sont, indépendamment l'un de l'autre, l'hydrogène ou un radical méthyle.

3. Composé selon l'une des revendications 1 à 2, **caractérisé en ce que** les résidus R₁ et R₄ sont un groupe lipophile, en particulier pour chacun le tert.butyl.

4. Composé selon l'une des revendications 1 à 3, **caractérisé en ce que** le résidu ionophore est un monoaza-couronne-éther, de formule générale II dans laquelle r et s sont, indépendamment l'un de l'autre, le nombre entier 0, 1 ou 2,

5. Monoaza-éther-couronne selon la revendication 4, pour la détermination des ions sodium, **caractérisé en ce que** r et s sont les nombres 1, respectivement 0.

6. Monoaza-éther-couronne selon la revendication 4, pour la détermination des ions potassium, **caractérisé en ce que** r et s sont les nombres 2, respectivement 1.
